Europäisches Patentamt

European Patent Office

Office européen des brevets

(11) Numéro de publication: **0 225 202**
**A1**

## (12) DEMANDE DE BREVET EUROPEEN

(21) Numéro de dépôt: 86402161.3

(22) Date de dépôt: 02.10.86

(51) Int. Cl.⁴: **F 16 L 9/14**
F 16 L 9/16, B 28 B 19/00

(30) Priorité: 03.10.85 FR 8514690

(43) Date de publication de la demande:
10.06.87 Bulletin 87/24

(84) Etats contractants désignés:
AT BE CH DE ES GB GR IT LI LU NL SE

(71) Demandeur: SOCIETE DES TUYAUX BONNA Société
anonyme dite:
89-91, rue du Faubourg Saint-Honoré
F-75008 Paris (FR)

(72) Inventeur: Belmon, Pierre Henri
47 rue Pauline Borghèse
F-92200 Neuilly sur Seine (FR)

(74) Mandataire: Hasenrader, Hubert et al
Cabinet BEAU DE LOMENIE 55, rue d'Amsterdam
F-75008 Paris (FR)

(54) Tuyau en béton à chemisage interne en matière plastique et procédé de réalisation d'un tel tuyau.

(57) L'invention concerne un tuyau en béton (10) comportant une chemise interne (12) en matière plastique.

Elle se caractérise en ce que la chemise interne (12) est réalisée à partir d'une bande (18) de matière plastique enroulée en hélice.

Fig.1

**Description**

**TUYAU EN BETON A CHEMISAGE INTERNE EN MATIERE PLASTIQUE ET PROCEDE DE REALISATION D'UN TEL TUYAU**

La présente invention concerne un tuyau en béton à chemisage interne en matière plastique et un procédé de réalisation d'un tel tuyau.

Les tuyaux en béton sont utilisés depuis longtemps pour :
- la distribution d'eau,
- les réseaux d'assainissement public,
- les transport de divers fluides constitués le plus souvent de rejets industriels.

Les deux dernières applications présentent des risques de corrosion du béton sous l'action des effluents, notamment les effluents gazeux qui se développent au sein des liquides véhiculés.

On connaît des solutions qui consistent à réaliser un revêtement protecteur intérieur par application de peinture, par application de mortier époxy, ou à l'aide d'une chemise intérieure en matière plastique (PVC, polyéthylène).

Le revêtement plastique a également comme avantage d'améliorer le coefficient d'écoulement des fluides, ce qui permet un accroissement des débits, ou une réduction des diamètres.

De manière classique, la chemise en matière plastique est réalisée à partir d'une feuille plane enroulée sur elle-même sous forme d'un cylindre, les deux bords opposés de la feuille étant donc rejoints et solidarisés par collage, soudage ou agrafage le long d'une génératrice du cylindre.

La chemise cylindrique est fixée sur un mandrin tubulaire et disposée à l'intérieur d'un moule, puis le béton est coulé dans le moule de manière à remplir l'espace annulaire entre le moule et la chemise. Pour favoriser l'accrochage entre le béton et la chemise, cette dernière comporte des saillies, typiquement réalisées sous forme de nervures à section en forme de T. dépassant à l'extérieur de la chemise et parallèles aux génératrices du cylindre.

Selon les efforts extérieurs auxquels le tuyau doit résister, le béton peut comporter ou non une armature métallique.

Les extrémités du moule sont conformées de manière à définir des extrémités d'emboîtement mâle et femelle aux deux bouts du tuyau.

En premier lieu, on remarque que l'on doit disposer, pour réaliser les chemises, de feuilles dont la largeur est égale au périmètre du tuyau.

Lorsqu'on fabrique toute une gamme de tuyaux de différents diamétres, ceci impose de disposer de feuilles ayant autant de largeurs différentes. Lorsque l'on atteint des diamètres importants, les largeurs de feuille deviennent également très importantes.

De plus, la matériau des feuilles est pratiquement dépourvu de rigidité propre, de sorte que lorsque la feuille est enroulée en forme de cylindre pour réaliser la chemise, se posent de problèmes de manutention puisque la chemise est incapable de conserver par elle-même cette forme cylindrique.

De plus, dans le tuyau fini, la chemise interne se termine avant les extrémités d'emboîtement mâle et femelle, de sorte qu'il est difficile d'empêcher la corrosion du béton dans les intervalles entre tuyaux successifs. Une solution classique à ce problème consiste à appliquer une peinture anti-corrosion dans les zones concernées. Une autre solution consiste à appliquer un joint couvrant intérieur après assemblage des tuyaux. Le joint couvrant est parfois constitué par la chemise elle-même que l'on laisse dépasser à l'une des extrémités lors de la fabrication du tuyau en béton. Cette partie dépassante vient recouvrir l'intervalle entre deux tuyaux successifs lors de la pose, la continuité de la chemise étant réalisée par soudage. Ces solutions augmentent le coût et les difficultés, particulièrement pour les tuyaux de petit diamètre (inférieurs à 800 mm) dans lesquels une intervention humaine est quasiment impossible.

Dans le but de pallier ces inconvénients, la présente invention propose un tuyau en béton comportant une chemise interne en matière plastique, caractérisé en ce que ladite chemise interne est réalisée à partir d'une bande de matière plastique enroulée en hélice.

On comprendra mieux les détails et avantages de l'invention à la lecture de la description qui va suivre, et qui se rapporte aux dessins annexés, dans lesquels :

La figure 1 est une vue latérale, avec arrachements partiels, d'un tuyau conforme à l'invention ;

la figure 2 est une demi coupe longitudinale du tuyau de la figure 1 illustrant en détail les extrémités du tuyau et leur mode d'emboîtement avec des tuyaux voisins ;

la figure 3 est une demi coupe longitudinale semblable à celle de la figure 2, illustrant des variantes d'emboîtement aux extrémités du tuyau ;

les figures 4a à 4i illustrent des variantes de nervures de la chemise interne du tuyau ;

les figures 5a à 5d illustrent des variantes d'assemblage bord à bord des spires hélicoïdales de la chemise ;

la figure 6 est une vue en perspective d'une machine pour projection de béton sur la chemise, et

la figure 7 est une section schématique d'une autre machine pour application de béton sur la chemise.

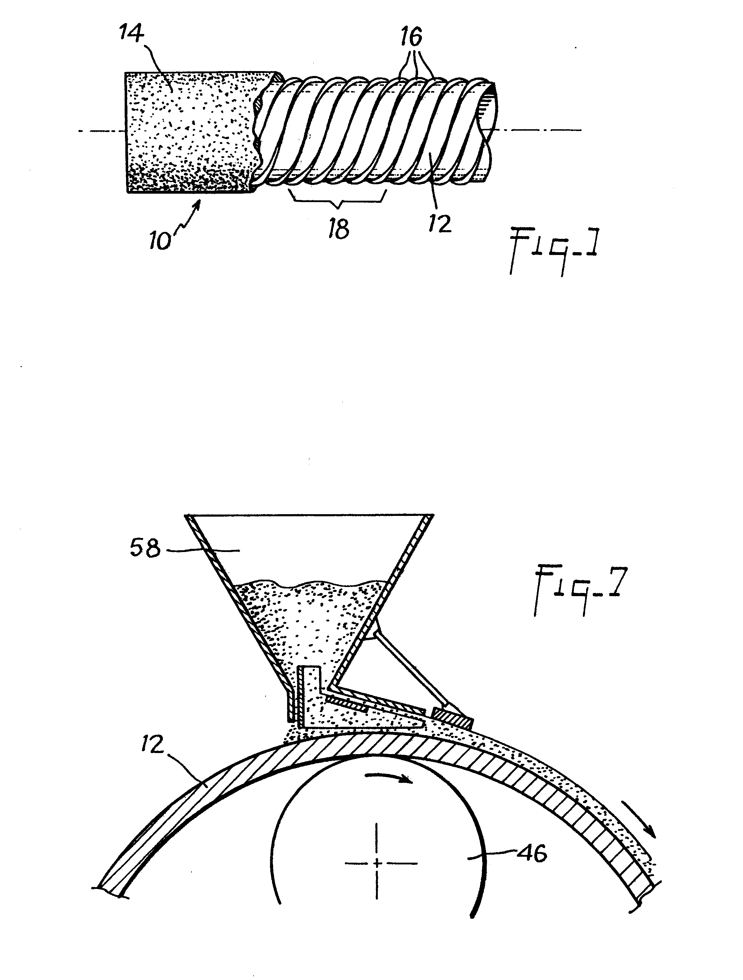

Le tuyau 10 illustré à la figure 1 se compose d'une chemise interne 12 en matière plastique, et d'un revêtement extérieur 14 en béton, éventuellement en béton armé.

La chemise 12 est constituée à partir d'une bande 18 de matière plastique enroulée en hélice, les bords de la bande étant joints par collage, soudage, agrafage, ou tout autre procédé permettant d'assurer à la fois la solidarisation et l'étanchéité des spires successives.

La chemise 12 présente des saillies externes 16 en vue de son accrochage sur le béton. Comme illustré, ces saillies externes se présentent sous forme de nervures venues de matière avec la bande enroulée en hélice pour constituer la chemise, de sorte qu'elles sont également enroulées en hélice en même temps que la bande.

Cet arrangement présente divers avantages :

En premier lieu, la bande a une largeur beaucoup plus faible que les feuilles enroulées en cylindre de la technique antérieure.

En second lieu, on peut utiliser une même largeur de bande pour des tuyaux de plusieurs diamètres différents,

En troisième lieu, on peut réaliser sans difficulté ni perte de matériau des tuyaux de toutes longueurs désirées, ce qui n'est pas le cas des techniques antérieures où l'on doit tenir compte des formats de feuilles disponibles ou bien recouper les feuilles à la longueur voulue.

Enfin, les nervures enroulées en hélice assurent une certaine rigidité propre à la chemise, ce qui facilite la manutention. On comprendra qu'il s'agit d'une rigidité toute relative, qui ne participe pas à la rigidité du tuyau une fois terminé, mais qui est suffisante pour conserver à la chemise une forme à peu près cylindrique à la sortie de la machine de mise en forme hélicoïdale jusqu'à sa mise en place sur le mandrin utilisé pour le moulage ou l'application du revêtement en béton.

Comme il a été mentionné, le raccordement des bords des spires successives peut être effectué de diverses manières.

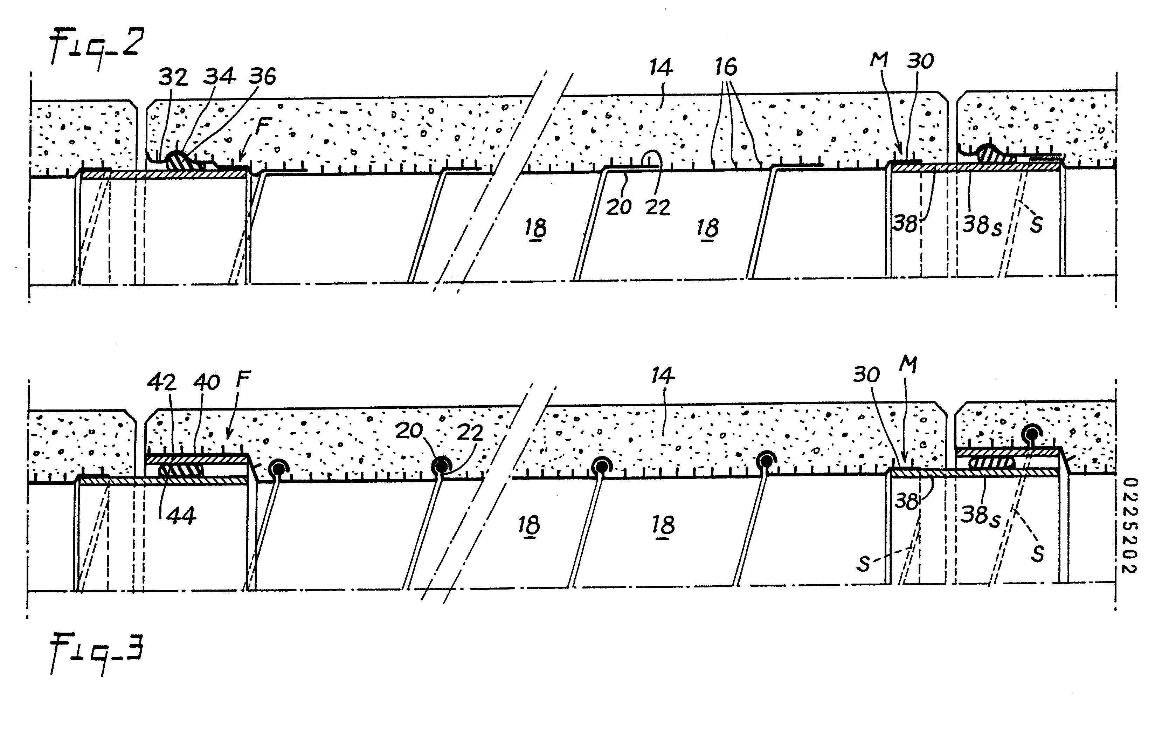

Une première technique illustrée à la figure 2 consiste à coller les bords 20 et 22 de bande 18, avec un léger chevauchement. A cet effet, la machine de mise en forme hélicoïdale comporte un applicateur de colle destiné à déposer un produit adhésif en continu sur le bord de la bande au fur et à mesure de la mise en forme.

Une autre technique consiste à souder les bords de bande, soit par thermosoudure, soit par soudage haute fréquence. A cet effet, la machine comporte des têtes conjuguées destinées à réaliser des soudures de ce type en continu au fur et à mesure de la mise en forme hélicoïdale.

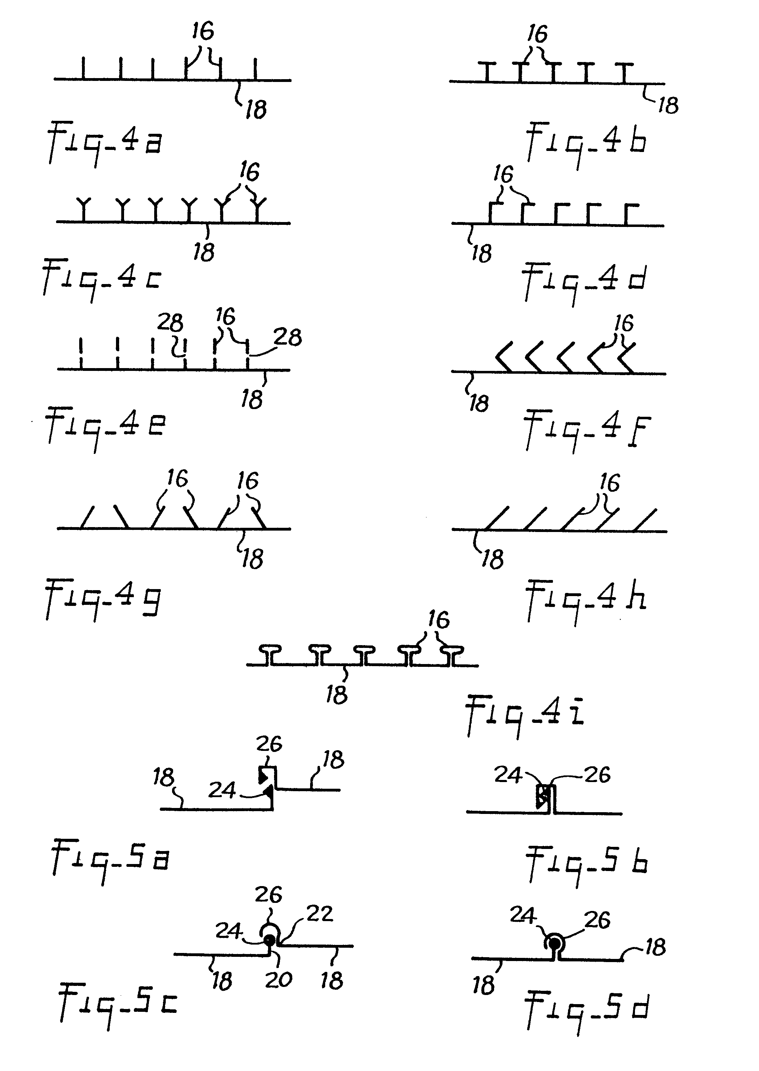

Une autre solution, illustrée aux figures 3, 5c et 5d consiste à pourvoir les deux bords 20 de la bande de profils complémentaires qui sont emboîtés par clipsage au moment de la mise en forme hélicoïdale.

L'un des profils comporte un bourrelet cylindrique 24 et l'autre profil comporte une goulotte 26 à section interne circulaire dont le col est plus étroit que le diamètre du bourrelet cylindrique.

En variante, (figures 5a, 5b) le bourrelet 24 a une section triangulaire et la goulotte 26 a une section interne sensiblement complementaire.

La machine de mise en forme comporte des molettes de pression destinées à provoquer la pénétration à force du bourrelet dans la goulotte.

Ces derniers types d'assemblage pourraient être mis en oeuvre lorsque la bande est réalisée par extrusion. Il sera en effet aisé de prévoir des découpes de contour adéquat dans la filière d'extrusion.

Pour ce qui concerne les nervures 16 d'ancrage de la bande, de nombreuses variantes sont également envisageables (figure 4a à 4h).

Lorsque la bande est obtenue par extrusion, il est possible de réaliser directement des nervures présentant une section en forme de T (figure 4b) ou de Y (figure 4c) qui offrent un excellent ancrage dans le béton.

Lorsque la bande est obtenue par calandrage, c'est-à-dire par laminage d'une bande-mère entre deux rouleaux, on peut obtenir des nervures droites telles qu'illustrées à la figure 4a, en prévoyant des gorges réparties le long de l'un des rouleaux de calandrage.

L'accrochage entre le béton et des nervures droites de ce type peut s'avérer insuffisant, et on pourra avoir recours à divers artifices pour améliorer cet accrochage.

Une première solution (figure 4e) consiste à ménager des trous 28 traversant les nervures à intervalles réguliers. Le béton formera ainsi des ponts d'accrochage au travers de ces trous.

Une seconde solution (figure 4 g) consiste à incliner les nervures par rapport à la bande, en imposant des inclinaisons opposées aux nervures adjacentes. Le béton remplissant les intervalles entre deux nervures inclinées l'une vers l'autre aura ainsi un profil en queue d'aronde ce qui évitera le décollement de la chemise.

Dans la mesure où la bande est initialement fabriquée à plat, cette inclinaison des nervures pourra résulter naturellement de la mise en forme hélicoïdale.

Des guides appropriés dans la machine de mise en forme imposeront aux nervures les sens d'inclinaison souhaités. Les nervures peuvent aussi être toutes inclinées dans le même sens (figure 4h).

Une troisième solution (Figures 4d, 4f) consiste à conférer aux nervures une section en forme de L. A cet effet, les nervures droites en sortie de la machine de calandrage sont rabattues sur une partie de leur hauteur au moyen de galets, de guides ou équivalents. Cette opération peut se faire à froid, ou encore à chaud par chauffage des nervures, jusqu'au voisinage de leur point de ramollissement.

Selon la variante illustrée à la figure 4i, la bande 18 est initialement plane et les nervures 16 sont obtenues par pliage de la bande dans le sens longitudinal. A l'aide de la figure, on comprend que l'on pratique, à intervalles réguliers, suivant la largeur de la bande, une succession de plis qui se rejoignent au moins au voisinage immédat du plan de la bande 18, des soudures longitudinales étant prévues au niveau des jonctions.

De préférence, les nervures sont réalisées sur la machine de mise en forme hélicoïdale, ce qui permet de n'avoir à approvisonner que des rouleaux de bande plane, donc particulièrement bon marché.

On conçoit donc que la machine d'enroulement de la bande en hélice fonctionne en continu et permet de réaliser des chemises de toutes longueurs désirées. La découpe de la chemise suivant un plan perpendiculaire à l'axe s'effectue par tout moyen conventionnel; couteau fixe ou mobile, fil porté au rouge, etc...

L'ébauche de chemise ainsi obtenue peut être aisément manipulée dans la mesure où les nervures en hélice lui confèrent une certaine rigidité circonférentielle.

Avant de réaliser le tuyau en béton autour de la chemise, il convient de lui donner une forme désirée aux deux extrémités pour tenir compte des formes d'emboîtement mâle/femelle du béton.

A cet effet, les extrémités de la chemise sont engagées dans des mandrins de mise en forme qui sont chauffés jusqu'à la température de ramollissement puis amenés en position de coopération, à la suite de quoi les mandrins sont refroidis puis séparés.

Selon la variante illustrée à la figure 2, l'une des extrémités (M) est ainsi élargie suivant une portion cylindrique droite 30, tandis que l'autre extrémité (F) est élargie suivant une portion cylindrique 32 similaire présentant une gorge interne 34 formant logement pour un joint torique 36. Dans cette variante, la forme d'emboîtement mâle est obtenue par un manchon cylindrique mâle 38 rigide en matière plastique également, qui est emboîté dans la portion cylindrique droite à la première extrémité et rendu solidaire de manière étanche de cette portion.

La partie dépassante 38s du manchon d'emboîtement mâle est engagée, lors de la mise en place des tuyaux, dans la seconde portion cylindrique à l'autre extrémité et à l'intérieur du joint torique qu'il écrase à l'intérieur de la gorge.

On remarque donc que le béton n'est exposé nulle part aux liquides véhiculés, ni aux effluents gazeux.

Selon la variante illustrée à la figure 3, la première portion d'extrémité (M) de la chemise est élargie de la même manière que précedemment et reçoit un manchon d'emboîtement 38 mâle rigide emboîté et solidarisé de manière étanche.

La seconde extrémité (F) de la chemise est élargie suivant une portion cylindrique (40) droite également mais de diamètre supérieur et reçoit un manchon d'emboîtement femelle 42 rigide, également en matière plastique, et solidarisé de manière étanche. Ce manchon femelle ne dépasse pas axialement l'extrémité du tuyau fini, et les diamètres respectifs des manchons mâle et femelle sont choisis de manière à définir entre eux un jeu radial dans lequel est emprisonné et écrasé un joint 44.

Cette variante présente par rapport à la précédente l'avantage suivant :

Dans les deux portions d'extrémité se développe une partie de la soudure hélicoïdale de la chemise (tracé en pointillé S). Ainsi, la gorge de réception du joint torique 36 de la première variante (figure 2) croise cette soudure hélicoïdale 5 à un endroit de sa circonférence. Les surépaisseurs de bande au niveau de la soudure peuvent engendrer des dénivellations à cet endroit de la gorge et des risques de fuite. Par contre, dans la seconde variante (figure 3), le joint torique 44 est appliqué sur des surfaces parfaitement continues et on évite un tel risque.

Pour ce qui concerne l'application du béton, on peut procéder de manière classique par moulage.

La chemise est engagée sur un mandrin et l'ensemble chemise + mandrin est descendu dans un moule cylindrique vertical puis le béton est coulé dans l'espace annulaire entre la chemise et le moule.

Si nécessaire, des armatures sont placées dans l'espace annulaire avant coulage du béton.

L'invention permet avantageusement d'appliquer le béton par projection.

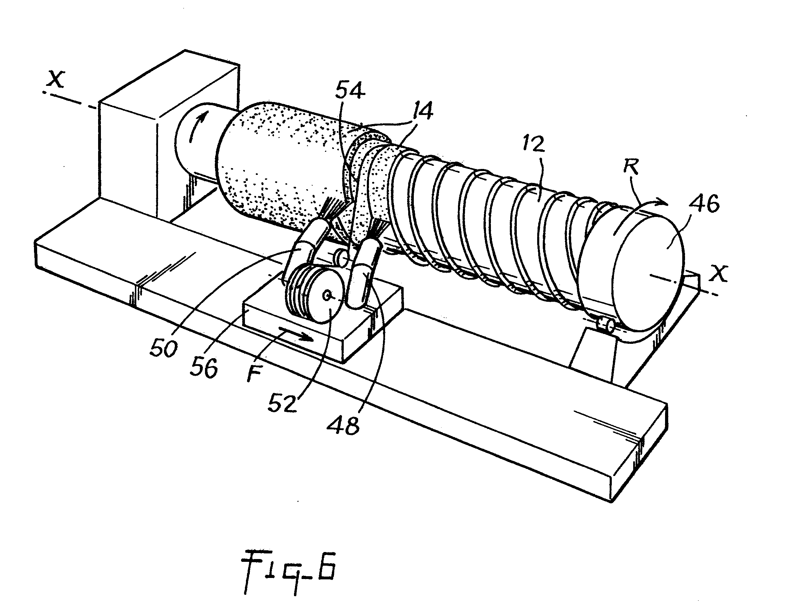

Comme illustré à la figure 6, on place pour ce faire la chemise 12 sur un mandrin 46 cylindrique horizontal et entraîné en rotation (flèche R) autour de son axe XX.

Une ou plusieurs têtes 48, 50 de projection de béton sont placées radialement face à la surface extérieure de la chemise et projettent sur cette dernière un débit de béton rigoureusement contôlé de manière à ce que le revêtement de béton 14 apporté par la tête 48, ou chaque tête, de projection ait une épaisseur prédéterminée au fur et à mesure de la rotation du mandrin 46. La tête 48, (ou les têtes 48, 50), est montée en translation linéaire (flèche F) le long du mandrin et la vitesse de translation est commandée en fonction de la vitesse de rotation du mandrin de telle manière que la, ou les têtes 48, 50 soit à tout moment face à l'intervalle séparant deux nervures (16) hélicoïdales voisines. On est ainsi assuré d'une excellente application du béton, y compris dans les zones en dépouille derrière les nervures, notamment les nervures en L, en T ou inclinées.

On peut procéder en une passe ou en plusieurs.

Avantageusement, lorsque l'on désire armer le béton, on procède à l'application en au moins deux passes et on enroule un ou plusieurs fils métalliques en hélice sur la première couche de béton résultant de la première passe, les fils étant ensuite recouverts par le béton appliqué par la seconde passe.

Dans la pratique, ceci est réalisé en continu, la tête de projection (48) assurant la première passe étant immédiatement suivie par le dévidoir 52 du fil 54 et ensuite par la seconde tête de projection 50, l'ensemble étant monté sur un chariot de translation commun 56.

La première tête 48 projette ainsi une première couche de béton, après quoi le câble métallique 54 est déposé en hélice sur cette première couche au fur et à mesure de la rotation du mandrin.

Enfin, la seconde tête 50 projette une seconde couche de béton qui recouvre à la fois la première couche et le ou les câbles métalliques 54.

En variante, les têtes de projection et les bobines de fil seront installées à poste fixe et le mandrin portant la chemise en matière plastique sera placé sur un chariot entraîné en translation face aux têtes de projection et au dévidoir.

Il est possible de ne prévoir qu'une seule tête de projection, le fil étant déroulé soit directement dans le jet de béton, soit entre deux couches de béton réalisées successivement, par exemple par aller et retour du mandrin.

L'invention s'applique également avantageusement à des machines à revêtir par vibration (figure 7).

Dans ce cas, la machine comporte une trémie d'alimentation 58 linéaire disposée sensiblement le long de la génératrice supérieure du mandrin 46. La trémie est soumise à des vibrations de manière à déposer sur la chemise une couche uniforme de béton dense et homogène au fur et à mesure de la rotation du mandrin.

On notera enfin d'autres avantages de l'invention :

D'une part. à épaisseur égale de béton les tuyaux selon l'invention résistent mieux aux charges ovalisantes. En effet, dans les tuyaux classiques, les nervures d'ancrage de la chemise sont orientées suivant des généractrices et constituent des amorces de fissuration du béton. Il convient donc de soustraire la hauteur des nervures de l'épaisseur réelle de béton pour effectuer le calcul de résistance. Pour des tuyaux selon l'invention le calcul de résistance peut être effectué avec l'épaisseur réelle de béton.

D'autre part, l'invention permet avantageusement de réaliser des tuyaux à paroi mince de béton avec fils d'armature spiralés qui sont conçus pour pouvoir subir des déformations élasto-plastiques en fonction des contraintes exercées par le terrain avoisinant. En effet, ces déformations provoquent de nombreuses micro-fissures dans le béton, qui sont autant de voies d'infiltration de liquides ou effluents corrosifs vers les armatures. La présence de la chemise interne constitue un barrage imperméable à ces liquides ou effluents et protège les armatures.

**Revendications**

1. Tuyau en béton comportant une chemise interne (12) en matière plastique et réalisée à partir d'une bande (18) de matière plastique enroulée en hélice, caractérisé en ce que ladite bande (18) comporte des nervures (16) saillantes destinées à son accrochage dans le béton et qui sont également enroulées en hélice.

2. Tuyau selon la revendication 1, caractérisé en ce que lesdites nervures (16) ont un profil choisi parmi les profils en T, en Y et en L.

3. Tuyau selon la revendication 1, caractérisé en ce que lesdites nervures (16) sont inclinées.

4. Tuyau selon l'une quelconque des revendications 1 à 3, caractérisé en ce que lesdites nervures (16) comportent des trous (28).

5. Tuyau selon l'une quelconque des revendications 1 à 3, caractérisé en ce que ladite bande et ses nervures sont obtenues par extrusion.

6. Tuyau selon l'une quelconque des revendications 1 à 3, caractérisé en ce que ladite bande et ses nervures sont obtenues par calandrage.

7. Tuyau selon l'une quelconque des revendications 1 à 3. caractérisé en ce que ladite bande est obtenue partir d'une bande plane, lesdites nervures étant définies par pliage.

8. Tuyau selon l'une quelconque des revendications 1 à 7, caractérisé en ce que les spires de bande (18) enroulée en hélice sont solidarisées par collage ou soudage avec recouvrement de leurs bords (20, 22).

9. Tuyau selon l'une quelconque des revendications 1 à 7, caractérisé en ce que les spires de bande (18) enroulée en hélice comportent des profils d'emboîtement par clipsage (24, 26) le long de leurs bords (20, 22).

10. Tuyau selon l'une quelconque des revendications 1 à 9, caractérisé en ce que ladite chemise comporte des formes d'emboîtement mâle (M) et femelle (F) à ses deux extrémités, ladite forme d'emboîtement mâle (M) consistant en un élargissement cylindrique droit (30) dans lequel est emboîté et solidarisé de manière étanche un manchon cylindrique mâle (38) rigide.

11. Tuyau selon la revendication 10, caractérisé en ce que ladite forme d'emboîtement femelle (F) consiste en un élargissement (32) de la chemise présentant une gorge interne (34) formant logement pour un joint torique (36).

12. Tuyau selon la revendication 10, caractérisé en ce que ladite forme d'emboîtement femelle (F) consiste en un élargissement cylindrique droit (40) de la chemise, dans lequel est emboîté et solidarisé de manière étanche un manchon cylindrique femelle (42) rigide, les diamètres respectifs des manchons cylindriques mâle (38) et femelle (42) ménageant un jeu radial dans lequel est emprisonné et écrasé un joint (44).

13. Procédé de réalisation d'un tuyau en béton selon l'une quelconque des revendications 1 à 12, caractérisé par les étapes suivantes :

on réalise une chemise cylindrique (12) en matière plastique par enroulement en hélice d'une bande (18) qui comporte des nervures saillantes (16) également enroulées en hélice,

on tronçonne ladite chemise cylindrique à une longueur choisie puis on l'engage sur un mandrin horizontal (46) entraîné en rotation (R), on projette du béton (14) à l'aide d'au moins une tête de projection (48) sur la surface extérieure de la chemise (12) tout en déplaçant en translation (F) ladite tête le long de la chemise en rotation, les vitesses de rotation et de translation étant ajustées de telle manière que la tête de projection (48) soit constamment face à un intervalle séparant deux nervures (16) contingües.

14. Procédé selon la revendication 13, caractérisé en ce qu'on projette le béton à l'aide d'au moins deux têtes (48, 50) de projection et que l'on dépose un ou plusieurs fils métalliques (54) suivant une hélice sur la couche de béton projeté par la première tête (48), la seconde tête (50) projetant une seconde couche de béton recouvrant la première couche et le ou les fils métalliques (54).

Fig-1

Fig-7

Fig-2

Fig-3

Fig-4a

Fig-4b

Fig-4c

Fig-4d

Fig-4e

Fig-4F

Fig-4g

Fig-4h

Fig-4i

Fig-5a

Fig-5b

Fig-5c

Fig-5d

0225202

Fig_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 178 685 (REDLAND PIPES LTD.) <br> * Page 2, lignes 100-123; figures 1-4 * | 1,13, 14 | F 16 L 9/14 <br> F 16 L 9/16 <br> B 28 B 19/00 |
| Y | FR-A-2 443 321 (SOCIETE DES TUYAUX BONNA) <br> * Revendications 1-5; figures 1,2 * | 1,13, 14 | |
| A | US-A-3 717 916 (WIENAND et al.) <br> * Figures 1-6 * | 1,5,8, 9 | |
| A | US-A-3 036 931 (WALDO R. KELL) <br> * Colonne 1, lignes 21-25 * | 1,13, 14 | **DOMAINES TECHNIQUES RECHERCHES (Int. Cl.4)** |
| A | GB-A- 619 788 (SOCIETE REUNIE EVERITE SITUBE) <br> * Figure 2 * | 1,13 | F 16 L <br> B 28 B |

Le présent rapport de recherche a été établi pour toutes les revendications

| Lieu de la recherche | Date d'achèvement de la recherche | Examinateur |
|---|---|---|
| LA HAYE | 15-11-1986 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82